# EUROPÄISCHE PATENTANMELDUNG

(11) **EP 4 813 555 A1**
(43) Veröffentlichungstag der Anmeldung: **30.09.2026**
(21) Anmeldenummer: 26157819.9
(22) Anmeldetag: 11.02.2026
(51) Int. Cl.: B23D 55/00, B27G 19/06, B28D 1/08

(54) **WERKZEUGMASCHINE MIT SÄGEWERKZEUG**

(30) Priorität: 07.03.2025 DE 102025108711
(71) Anmelder: LISSMAC Maschinenbau GmbH, 88410 Bad Wurzach (DE)
(72) Erfinder: Hildebrand, Rainer, 88339 Bad Waldsee (DE); Rist, Stephan, 88410 Bad Wurzach (DE); Schöllhorn, Christian, 88319 Aitrach (DE)
(74) Vertreter: RavensPAT Patentanwälte Partnerschaft mbB

(57) **Zusammenfassung**

Es wird eine Werkzeugmaschine (1) mit einem Werkzeuggehäuse (2) und einer Antriebseinheit (3) für ein Sägewerkzeug (4) vorgeschlagen, wobei das Sägewerkzeug (4) in einem Arbeitsbetrieb der Werkzeugmaschine (1) mit der Antriebseinheit (3) umlaufend antreibbar ist, wobei die Werkzeugmaschine (1) im Arbeitsbetrieb zum trennenden Bearbeiten eines Werkstücks ausgebildet ist, wobei die Werkzeugmaschine (1) einen Bearbeitungsbereich (5) umfasst, in welchem ein Werkstück zur Bearbeitung positionierbar ist, wobei sich der Bearbeitungsbereich (5) zwischen einem oberen Bereichsende (6) und einem unteren Bereichsende (7) erstreckt, wobei die Werkzeugmaschine (1) ein Schutzmodul (8) umfasst, wobei das Schutzmodul (8) einen unteren Endabschnitt (11) aufweist, wobei das Schutzmodul (8) derart ausgebildet ist, dass das Schutzmodul (8) wenigstens abschnittsweise entlang einer Bewegungsrichtung (R) des Sägewerkzeugs (4) im Bearbeitungsbereich (5) bewegbar ist, wobei sich das Schutzmodul (8) entlang einer Strecke (S) zwischen dem oberen Bereichsende (6) des Bearbeitungsbereichs (5) und dem unteren Endabschnitt (11) des Schutzmoduls (8) erstreckt und in diesem Bereich das Sägewerkzeug (4) im Querschnitt umfänglich teilweise umgibt. Erfindungsgemäß ist ein Abdeckmodul (9) vorgesehen, wobei das Abdeckmodul (9) so ausgebildet ist, dass das Abdeckmodul (9) im Bearbeitungsbereich (5) entlang einer Bewegungsrichtung (R) des Sägewerkzeugs (4) bewegbar ist, wobei das Abdeckmodul (9) so ausgebildet ist, dass das Abdeckmodul (9) das Sägewerkzeug (4) zwischen dem unteren Endabschnitt (11) des Schutzmoduls (8) und einer oberen Abdeckgrenze (10) um mehr als 50 % der Längserstreckung des Sägewerkzeugs (4) abdeckt, mit der Wirkung, dass das Sägewerkzeug (4) zwischen der oberen Abdeckgrenze (10) und dem unteren Endabschnitt (11) des Schutzmoduls (8) von dem Schutzmodul (8) und dem Abdeckmodul (9) um mehr als 50 % der Längserstreckung des Sägewerkzeugs (4) vollumfänglich abgedeckt ist.

## Beschreibung

Die Erfindung betrifft eine Werkzeugmaschine mit einem Werkzeuggehäuse und einer Antriebseinheit für ein Sägewerkzeug der Werkzeugmaschine, wobei das Sägewerkzeug in einem Arbeitsbetrieb der Werkzeugmaschine mit der Antriebseinheit umlaufend antreibbar ist, gemäß dem Oberbegriff des Anspruchs 1.

### Stand der Technik

Aus dem Stand der Technik sind Werkzeugmaschinen mit umlaufendem Sägewerkzeug wie beispielsweise Bandsägen bekannt. Einige dieser Bandsägen bieten bereits einen gewissen Unfallschutz, indem das Sägewerkzeug, etwa das Sägeband, im Bearbeitungsbereich abdeckbar ist, insbesondere dann, wenn kein Werkstück im Bearbeitungsbereich vorhanden ist. So soll verhindert werden, dass ein Nutzer versehentlich mit einem Körperteil mit dem Sägewerkzeug in Kontakt kommt.

Üblicherweise geschieht dies durch ein Schutzblech, welches vertikal verschiebbar ist, um das Sägewerkzeug im Bearbeitungsbereich für das Werkstück zugänglich zu machen oder eben zu bedecken.

### Aufgabe und Vorteile der Erfindung

Aufgabe der Erfindung ist es demgegenüber, eine Werkzeugmaschine vorzuschlagen, die hinsichtlich des Standes der Technik einen erhöhten Schutz des Nutzers bietet.

Diese Aufgabe wird, ausgehend von einer Werkzeugmaschine der einleitend genannten Art, durch die Merkmale des Anspruchs 1 gelöst. Durch die in den abhängigen Ansprüchen genannten Maßnahmen sind vorteilhafte Ausführungen und Weiterbildungen der Erfindung möglich.

Die Erfindung betrifft eine Werkzeugmaschine mit einem Werkzeuggehäuse und einer Antriebseinheit für ein Sägewerkzeug der Werkzeugmaschine, wobei das Sägewerkzeug in einem Arbeitsbetrieb der Werkzeugmaschine mit der Antriebseinheit umlaufend antreibbar ist, wobei die Werkzeugmaschine im Arbeitsbetrieb zum trennenden Bearbeiten eines Werkstücks ausgebildet ist, wobei die Werkzeugmaschine einen Bearbeitungsbereich umfasst, in welchem ein Werkstück zur Bearbeitung positionierbar ist, wobei sich der Bearbeitungsbereich zwischen einem oberen Bereichsende und einem unteren Bereichsende erstreckt, wobei die Werkzeugmaschine ein Schutzmodul umfasst, wobei das Schutzmodul einen unteren Endabschnitt aufweist, wobei das Schutzmodul derart ausgebildet ist, dass das Schutzmodul wenigstens abschnittsweise entlang einer Bewegungsrichtung des Sägewerkzeugs im Bearbeitungsbereich bewegbar ist, wobei sich das Schutzmodul entlang einer Strecke zwischen dem oberen Bereichsende des Bearbeitungsbereichs und dem unteren Endabschnitt des Schutzmoduls erstreckt und in diesem Bereich das Sägewerkzeug im Querschnitt umfänglich teilweise umgibt.

Die Werkzeugmaschine umfasst dabei ein Werkzeuggehäuse, ein Sägewerkzeug und eine Antriebseinheit für das Sägewerkzeug der Werkzeugmaschine. Das Werkzeuggehäuse ist insbesondere wenigstens in einem oberen Bereich der Werkzeugmaschine angeordnet. Das Sägewerkzeug ist im Arbeitsbetrieb der Werkzeugmaschine mit der Antriebseinheit umlaufend antreibbar.

Die Werkzeugmaschine ist im Arbeitsbetrieb zum trennenden und/oder spanenden Bearbeiten eines Werkstücks ausgebildet.

Die Werkzeugmaschine umfasst einen Bearbeitungsbereich, in welchem ein Werkstück zur Bearbeitung positionierbar ist, wobei sich der Bearbeitungsbereich zwischen einem oberen Bereichsende und einem unteren Bereichsende erstreckt. Denkbar ist, dass das Werkzeuggehäuse das obere Bereichsende begrenzt. Beispielsweise ist innerhalb des Werkzeuggehäuses ein Führungsrad vorhanden, wobei das Führungsrad dazu ausgebildet ist, das Sägewerkzeug im Arbeitsbetrieb zu führen und/oder anzutreiben. Beispielsweise ist das Sägewerkzeug direkt am Führungsrad anliegend vorhanden.

Die Werkzeugmaschine weist ein Schutzmodul auf, wobei das Schutzmodul einen unteren Endabschnitt aufweist und derart ausgebildet ist, dass das Schutzmodul wenigstens abschnittsweise entlang einer Bewegungsrichtung des Sägewerkzeugs im Bearbeitungsbereich bewegbar ist.

Beispielsweise ist das Schutzmodul u-förmig oder näherungsweise u-förmig ausgebildet. Beispielsweise ist das Sägewerkzeug abschnittsweise innerhalb des Schutzmoduls vorhanden.

Beispielsweise ist das Schutzmodul derart ausgebildet, dass es am Sägewerkzeug im Bearbeitungsbereich wenigstens an zwei, insbesondere an drei Seiten umgebend anordenbar ist. Zum Beispiel ist das Schutzmodul derart ausgebildet, dass das Schutzmodul das Sägewerkzeug z. B. mit einem Abstand außen teilumfänglich umschließt.

Beispielswiese kann das Schutzmodul das Sägewerkzeug entlang einer Erstreckung zwischen dem oberen Ende des Bearbeitungsbereichs und dem unteren Endabschnitts des Schutzmoduls partiell umgeben.

Beispielsweise ist der vom Schutzmodul abgedeckte Bereich definiert von der Erstreckung des Schutzmoduls im Bearbeitungsbereich, insbesondere von dem Abstand des unteren Endabschnitts des Schutzmoduls zu dem oberen Ende des Bearbeitungsbereichs.

Beispielsweise existiert ein Sägebereich im Bearbeitungsbereich, wobei sich der Sägebereich im Bereich zwischen dem unteren Bereichsende des Bearbeitungsbereichs und dem unteren Endabschnitts des Schutzmoduls erstreckt. Beispielsweise weist dieser Bereich ein nicht abgedecktes, ergo frei zugängliches, Sägewerkzeug auf. Beispielsweise kann das zu bearbeitende Werkstück im Sägebereich bearbeitet werden.

Denkbar ist eine Ausführung, bei der das Schutzmodul im Bearbeitungsbereich wenigstens partiell am Sägewerkzeug bzw. um das Sägewerkzeug herum anordenbar ist, wenn die Werkzeugmaschine nicht im Arbeits-/Bearbeitungsbetrieb ist.

Denkbar ist, dass das Schutzmodul mit einer Linearverschiebung entlang der Bewegungsrichtung des Sägewerkzeugs im Bearbeitungsbereich bewegbar ist.

Beispielsweise ist das Schutzmodul entlang einer Führungsschiene oder eines Führungsprofils bewegbar.

Beispielsweise ist das Schutzmodul stufenlos entlang der Bewegungsrichtung des Sägewerkzeugs im Bearbeitungsbereich bewegbar und/oder verstellbar. Möglich ist auch eine Ausführung, bei der das Schutzmodul stufenweise entlang der Bewegungsrichtung des Sägewerkzeugs im Bearbeitungsbereich bewegbar und/oder verstellbar ist.

Zum Beispiel ist das Schutzmodul derart ausgebildet, dass das Schutzmodul beim Verstellen an der Stelle des Loslassens bis zum weiteren Verstellen verbleibt. Beispielsweise ist das Schutzmodul diesbezüglich selbsthemmend oder gefedert ausgebildet.

Denkbar ist ein Greifelement am Schutzmodul vorhanden, welches ein Nutzer greifen kann, wenn das Schutzmodul verschoben werden soll.

Die erfindungsgemäße Werkzeugmaschine zeichnet sich dadurch aus, dass ein Abdeckmodul vorgesehen ist, wobei das Abdeckmodul so ausgebildet ist, dass das Abdeckmodul im Bearbeitungsbereich entlang einer Bewegungsrichtung des Sägewerkzeugs bewegbar ist, wobei das Abdeckmodul so ausgebildet ist, dass das Abdeckmodul das Sägewerkzeug zwischen dem unteren Endabschnitt des Schutzmoduls und einer oberen Abdeckgrenze um mehr als 50 % der Längserstreckung des Sägewerkzeugs abdeckt, mit der Wirkung, dass das Sägewerkzeug zwischen der oberen Abdeckgrenze und dem unteren Endabschnitt des Schutzmoduls von dem Schutzmodul und dem Abdeckmodul um mehr als 50 % der Längserstreckung des Sägewerkzeugs vollumfänglich abgedeckt ist. Dies hat den Vorteil, dass ein besserer Schutz für den Nutzer gewährleistet werden kann, da ein versehentliches Eingreifen in das Sägewerkzeug so aus allen Richtungen nicht möglich ist und somit Verletzungen verhindert werden können.

Beispielsweise ist es regelmäßig so, dass das Abdeckmodul und das Schutzmodul sich über die gleiche Länge erstrecken bzw. ein vorderes Ende des Abdeckmoduls und der Endabschnitt des Schutzmoduls bündig sind. Beispielsweise ist es regelmäßig so, dass das Abdeckmodul und das Schutzmodul das Sägewerkzeug zwischen dem unteren Endabschnitt des Schutzmoduls und einer oberen Abdeckgrenze nicht nur über 50 %, sondern 100 % also die volle Längserstreckung des Sägewerkzeugs in diesem Bereich oberhalb des Werkstücks abdeckt. Die restliche Längserstreckung des Sägewerkzeugs im Bearbeitungsbereich ist frei von Schutz- und Abdeckmodul und ist zur Bearbeitung eines Werkstücks nutzbar. Über die gesamte Höhe des Bearbeitungsbereich betrachtet ist damit oberhalb des Werkstücks das Sägewerkzeug über die dazugehörige Längserstreckung zum Beispiel zwischen mehr als 50 %, bevorzugt zu 100 % der Längserstreckung in diesem oberen Bereich, umfänglich geschlossen abgedeckt. Dieser nicht zur Bearbeitung benötigte Abschnitt des Sägewerkzeugs kann damit keine Verletzungsgefahr darstellen.

Zum Beispiel besteht das Abdeckmodul aus einem Stahlmaterial. Zum Beispiel ist das Abdeckmodul aus einem Federstahlmaterial gebildet. Zum Beispiel ist das Abdeckmodul aus einem Federstahlblech gebildet. Zum Beispiel besteht das Abdeckmodul aus einem biegsamen und/oder aufrollbaren Federstahlblech.

Bisher wird aufgrund der physischen Gegebenheiten das Sägewerkzeug lediglich zu einem Teil umfänglich abgedeckt, sodass das Sägewerkzeug aus einem Richtungsbereich zugänglich bleibt und es so zu Unfällen mit Verletzungen kommen kann. Der bisher von außen zugängliche Richtungsbereich zum Sägewerkzeug ist mit dem Abdeckmodul abgedeckt, was die Arbeitssicherheit beim Arbeiten mit der erfindungsgemäßen Werkzeugmaschine erhöht.

Zum Beispiel ist das Abdeckmodul so ausgebildet ist, dass bezogen auf die Länge des Sägewerkzeugs zwischen dem unteren Endabschnitt des Schutzmoduls und der oberen Abdeckgrenze, das Abdeckmodul das Sägewerkzeug zwischen dem unteren Endabschnitt des Schutzmoduls und der oberen Abdeckgrenze um mehr als 60 % oder um mehr als 70 % oder um mehr als 80 % oder um mehr als 90 % der Längserstreckung des Sägewerkzeugs abdeckt. Beispielsweise ist das Abdeckmodul so ausgebildet ist, dass das Abdeckmodul das Sägewerkzeug zwischen dem unteren Endabschnitt des Schutzmoduls und der oberen Abdeckgrenze in Längserstreckung des Sägewerkzeugs vollständig abdeckt bzw. über 100 % der Längserstreckung des Sägewerkzeugs im genannten Bereich abdeckt. Vorzugsweise ist damit in diesem Bereich das Sägewerkzeug vollumfänglich und über die gesamte betreffende Länge außen umschlossen bzw. vollumfänglich abgedeckt. Die restliche Länge des Sägewerkzeugs ist ohnehin innerhalb des Werkzeuggehäuses untergebracht und stellt daher ebenfalls keine Verletzungsgefahr dar.

Beispielsweise ist das Abdeckmodul im Wesentlichen aus einem Flächenelement gebildet. Beispielsweise deckt das Abdeckmodul die offene Seite des Schutzmoduls entlang der Strecke zwischen dem unteren Endabschnitt des Schutzmoduls und einer oberen Abdeckgrenze ab. Beispielswiese deckt das Abdeckmodul die offene Seite des Schutzmoduls entlang dessen Erstreckung über dessen Länge und/oder Breite ab, insbesondere über die Breite der offenen Seite und zwischen dem unteren Endabschnitt des Schutzmoduls und einer oberen Abdeckgrenze.

Die obere Abdeckgrenze ist zum Beispiel dort, wo das Schutzmodul in das Werkzeuggehäuse im oberen Bereich der Werkzeugmaschine eintaucht. An dieser Stelle ist vorzugsweise das obere Bereichsende des Bearbeitungsbereichs.

Beispielsweise ist der vom Abdeckmodul abgedeckte Bereich linear abhängig von dem Abstand zwischen dem unteren Endabschnitt des Schutzmoduls und der oberen Abdeckgrenze.

Denkbar ist, dass das Abdeckmodul mit einer Linearverschiebung entlang der Bewegungsrichtung des Sägewerkzeugs im Bearbeitungsbereich bewegbar ist.

Beispielsweise ist das Abdeckmodul stufenlos entlang der Bewegungsrichtung des Sägewerkzeugs im Bearbeitungsbereich bewegbar verstellbar ist. Möglich ist auch eine Ausführung, bei der das Abdeckmodul stufenweise entlang der Bewegungsrichtung des Sägewerkzeugs im Bearbeitungsbereich bewegbar verstellbar ist.

Zum Beispiel ist das Abdeckmodul derart ausgebildet, dass das Schutzmodul beim Verstellen an der Stelle des Loslassens bis zu einem weiteren Verstellen verbleibt. Beispielsweise ist das Abdeckmodul diesbezüglich selbsthemmend oder gefedert ausgebildet.

Beispielsweise ist ein Greifelement am Abdeckmodul und/oder am Schutzmodul vorhanden, welches ein Nutzer greifen kann, wenn das Abdeckmodul und/oder das Schutzmodul verschoben werden soll.

Auf diese Weise kann die Werkzeugmaschine einen verbesserten Schutz des Nutzers bieten, da ein versehentliches Eingreifen in das Sägewerkzeug stärker verhindert wird als es bei bisherigen Werkzeugmaschinen der Fall ist.

Beispielsweise ist das Abdeckmodul rollbar ausgebildet. Der Vorteil einer solchen Ausführungsform ist, dass so eine kompakte Bauweise ermöglicht wird. Beispielsweise ist das Abdeckmodul relativ dünn und dadurch auch zu einem gewissen Grad flexibel ausgebildet. Das Abdeckmodul kann z.B. aus Blech, Kunststoff oder Gummi gebildet sein. Denkbar ist auch, dass das Abdeckmodul biegbar, umlenkbar, rollbar und/oder faltbar ausgebildet ist.

Denkbar ist, dass das Abdeckmodul und das Schutzmodul als zwei separate Bauteile ausgebildet sind.

Beispielsweise ist das Abdeckmodul einteilig ausgebildet. Denkbar ist, dass das Abdeckmodul aus mehreren benachbarten Abdeckelementen ausgebildet ist. Beispielsweise sind zueinander benachbarte Abdeckelemente beweglich miteinander gekoppelt.

Beispielsweise weist das Abdeckmodul wenigstens eine Perforierung auf.

Beispielsweise ist ein Umlenkelement zum Umlenken des Abdeckmoduls vorhanden. Zum Beispiel ist das Umlenkelement unbeweglich vorhanden oder beweglich gelagert, zum Beispiel drehbar gelagert. Beispielsweise ist ein Umlenkelement als Umlenkrollelement ausgebildet, das um eine Drehachse drehbar gelagert ist. Zum Beispiel ist das Abdeckmodul um eine Außenseite des Umlenkelements umfänglich aufliegend bzw. in Anlage. Beispielsweise ist ein Umlenkrollelement vorhanden, wobei das Abdeckmodul an dem Umlenkrollelement fixiert ist, wobei das Umlenkrollelement dazu ausgebildet ist, das Abdeckmoduls aufzuwickeln. Der Vorteil einer solchen Ausführung ist, dass zum einen eine kompakte Bauweise ermöglicht wird, während andererseits das System einfach und fehlerunanfällig ausbildbar ist.

Beispielsweise ist das Abdeckmodul über ein vorgespanntes Umlenkelement bewegbar. Beispielsweise ist das Abdeckmodul über eine vorgespannte Rolle geführt. Beispielsweise ist das Abdeckmodul über eine vorgespannte Rolle geführt und mit dem Schutzmodul bewegbar. Zum Beispiel ist das Abdeckmodul über eine vorgespannte Rolle bewegbar und gemeinsam mit dem Schutzmodul bewegbar. Beispielsweise ist mit dem bewegten Abdeckmodul die bislang offene Seite des Schutzmoduls geschlossen z. B. das innenliegenden Sägewerkzeug nach außen abgeschlossen. Damit ist ein geschlossener Handschutz um das Sägewerkzeug herum ausgebildet. Außerdem ist der Handschutz über den gesamten möglichen Schnittbereich in der Höhe verschiebbar ausgebildet. Eine Seite, z. B. eine hintere Seite, des Schutzmoduls muss konstruktionsbedingt offen ausgebildet sein. Daher ist das die offene Seite des Schutzmoduls abdeckbare Abdeckmodul vorgesehen, was aus Gründen der Arbeitssicherheit vorteilhaft ist.

Beispielsweise ist das Umlenkrollelement im Bereich des oberen Bereichsendes z. B. oberhalb des Bereichsendes des Bearbeitungsbereichs angeordnet. Beispielsweise ist das Umlenkrollelement dazu ausgebildet, die Ausrichtung des Abdeckmoduls zumindest abschnittsweise zu ändern. So ist z.B. bei der Bewegung des Abdeckmoduls die Bewegungsrichtung eines Teilabschnitts des Abdeckmoduls nach dem Umlenkrollelement eine andere Bewegungsrichtung als die des Teilabschnitts vor dem Umlenkrollelement, Denkbar ist, dass das Umlenkrollelement das Abdeckmodul wenigstens partiell umlenkt, insbesondere entlang eines Teils des Werkzeuggehäuses umlenkt.

Das Abdeckmodul kann dabei entweder fest oder lösbar mit dem Umlenkrollelement fixiert sein. Beispielsweise ist ein Ende des Abdeckmoduls fest oder lösbar mit dem Umlenkrollelement fixiert. Beispielsweise ist das Abdeckmodul wenigstens abschnittsweise an dem Umlenkrollelement anliegend.

Denkbar ist auch eine Ausführung mit zwei oder mehr Umlenkrollelementen.

Beispielsweise ist das Abdeckmodul mit dem Schutzmodul verbunden. Denkbar ist dabei, dass das Abdeckmodul mit dem Schutzmodul direkt oder indirekt verbunden ist. Beispielsweise sind Abdeckmodul und Schutzmodul aneinander lösbar fixiert. Beispielsweise sind Abdeckmodul und Schutzmodul aneinander fest fixiert. Beispielsweise sind Abdeckmodul und Schutzmodul so miteinander verbunden, dass ein gemeinsames Bewegen von Abdeckmodul und Schutzmodul ermöglicht ist. Auf diese Weise muss zur Abdeckung des Sägewerkzeugs im Bearbeitungsbereich lediglich ein Arbeitsschritt erfolgen, sodass die Gefahr, dass ein Nutzer sich am Sägewerkzeug verletzt, verringert wird. Zudem entfällt die Möglichkeit, dass der Nutzer vergisst, eines der beiden Module, Abdeckmodul und Schutzmodul, zu schließen, sodass das Sägewerkzeug bei Nichtbenutzung der Werkzeugmaschine stets rundum abgedeckt ist.

Möglich ist, dass Abdeckmodul mit dem Schutzmodul, lösbar wie beispielsweise eingehakt, verschraubt oder unlösbar verbunden ist, wie etwa verschweißt oder verlötet. Beispielsweise sind Abdeckmodul und Schutzmodul punktuell miteinander verbunden. Beispielsweise ist das Abdeckmodul mit dem Schutzmodul am unteren Endabschnitt des Schutzmoduls und/oder am in Schwerkraftrichtung unteren Ende des Abdeckmoduls und/oder des Schutzmoduls miteinander verbunden. Hierdurch nimmt das Abdeckmodul beim Bewegen das Schutzmodul mit, sodass der Nutzer lediglich eine Bewegung durchführen muss um sowohl Schutzmodul als auch Abdeckmodul zu positionieren, sodass zum einen ein einfacheres Arbeiten und zum anderen ein sichereres Arbeiten ermöglicht wird, da weniger Arbeitsschritte im Bereich des Sägewerkzeugs vollzogen werden müssen.

Beispielsweise ist ein unteres Ende des Abdeckmoduls bündig mit einem unteren Ende des Schutzmoduls. Beispielsweise bilden die Stirnseiten der unteren Enden des Abdeck- und des Schutzmoduls eine gemeinsame Ebene, die z. B. parallel zur Ebene einer Oberseite des Auflageelements ausgerichtet ist.

Zum Beispiel ist das Abdeckmodul und das Schutzmodul bewegungsgekoppelt. Zum Beispiel bewirkt eine Bewegung des Schutzmoduls eine entsprechende Bewegung, insbesondere lineare Bewegung, des Abdeckmoduls und z. B. umgekehrt.

Beispielsweise ist das Abdeckmodul durch das Umlenkrollelement auf- und abwickelbar ausgebildet. Dies ermöglicht eine kompakte, platzsparende Bauweise. Beispielsweise ist die Werkzeugmaschine derart ausgebildet, dass das Abdeckmodul auf das Umlenkrollelement aufwickelbar ist. Denkbar ist, dass das Abdeckmodul innerhalb des Umlenkrollelements aufwickelbar ist. Beispielsweise wird das Abdeckmodul in einem Querschnitt spiralförmig oder zu einer Spirale aufgewickelt. Beispielsweise ist das Umlenkrollelement kugelgelagert ausgebildet.

Beispielsweise ist das Umlenkrollelement derart ausgebildet, dass es die Bewegungsrichtung des Abdeckmoduls im Bereich des Umlenkrollmoduls verändert, sodass das Abdeckmodul auf der Seite des Umlenkrollelements, welche dem Bearbeitungsbereich näher ist, in Bewegungsrichtung des Sägewerkzeugs bewegbar ist, und das Abdeckmodul auf der Seite des Umlenkrollelements, welche dem Bearbeitungsbereich ferner ist, in einer Richtung, die quer zur Bewegungsrichtung des Sägewerkzeugs verläuft, bewegbar ist. Beispielsweise lenkt das Umlenkrollmodul das Abdeckmodul im Bereich des Umlenkrollmoduls derart um, dass das Abdeckmodul auf der Seite des Umlenkrollelements, welche dem Bearbeitungsbereich ferner ist, parallel zu einem Abschnitt des Werkzeuggehäuses bewegbar ist.

Beispielsweise ist das Umlenkrollelement innerhalb des Werkzeuggehäuses vorhanden. So kann das Umlenkrollelement sowie das Abdeckmodul zu einem gewissen Grad vor Verschmutzung und damit einhergehenden Störungen bei der Bewegung des Abdeckmoduls geschützt werden. Denkbar ist, dass das Abdeckmodul durch eine Öffnung im Werkzeuggehäuse bewegbar ist, welche z. B. nur ein unwesentlich größeres Ausmaß aufweist, als es das Abdeckmodul im Querschnitt aufweist.

Beispielsweise ist das Umlenkrollelement federgespannt ausgebildet. Dies kann den Vorteil ausbilden, dass das Schutzmodul und/oder das Abdeckmodul nicht selbstständig oder ungewollt in den Bearbeitungsbereich fällt, etwa wenn ein Nutzer in diesem Bereich tätig ist. Beispielsweise kann die Feder so gewählt bzw. gespannt sein, dass die Federkraft und die Gewichtskraft des Abdeckmoduls und des Schutzmoduls gleich oder zumindest nahezu gleich sind. Zudem kann über eine Feder die zur Bewegung von Schutzmodul und/oder Abdeckmodul benötigte Kraft justiert und im Nachgang auch nachgespannt werden. Denkbar ist, dass die Feder von außerhalb des Gehäuses spannbar ist, auch wenn die Feder selbst gegebenenfalls im Inneren des Gehäuses positioniert ist,

Beispielsweise ist das Umlenkrollelement als eine Rolle ausgebildet. Auf diese Weise kann das Umlenkrollelement selbstreinigend ausgebildet sein. Beispielsweise ist das Abdeckmodul aufgerollt konvex-konkav gebogen, sodass Staub und anderer Schmutz zur Seite bzw. nach Außen abfallen kann.

Beispielsweise weist die Werkzeugmaschine am unteren Bereichsende des Bearbeitungsbereichs ein Auflageelement zur Auflage eines Werkstücks bei der Bearbeitung des Werkstücks auf, wobei das Schutzmodul und/oder das Abdeckmodul bis hin zu einem Kontakt mit dem Auflagemodul bewegbar ausgebildet sind. Dies dient zum einen der einfacheren Handhabung bei Bearbeitung des Werkstücks und bietet gleichzeitig einen Verletzungsschutz im gesamten Bearbeitungsbereich.

Beispielsweise kann das Auflagemodul als Tisch oder Tischplatte ausgebildet sein. Beispielsweise erstreckt sich ein Arbeitsbereich zwischen Auflageelement und dem Endabschnitt des Schutzmoduls. Der Arbeitsbereich wäre dann demnach maximal, wenn das Schutzmodul in die am weitesten vom Auflagemodul entfernte Position gebracht ist.

Bei z. B. vollständig verlagerter Position von Schutzmodul und Abdeckmodul aus dem Bearbeitungsbereich in Richtung oberes Bereichsende entspricht beispielsweise der Arbeitsbereich dem Bearbeitungsbereich. Dann fallen der Arbeitsbereich und der Bearbeitungsbereich zusammen, da Schutzmodul und Abdeckmodul vollständig aus dem Bearbeitungsbereich herausbewegt sind. Ein zu bearbeitendes Werkstück kann eine maximale Höhe aufweisen, die dem Bearbeitungsbereich entspricht. Demgemäß kann ein zu bearbeitendes Werkstück eine maximale Höhe aufweisen, die dem Abstand zwischen der oberen Abdeckgrenze, wie eine Unterseite des Werkzeuggehäuses, und dem unteren Endabschnitt bzw. dem Auflageelement entspricht.

Zum Beispiel ist die Werkzeugmaschine als Mineralwerkstoff-Sägemaschine ausgebildet.

Zum Beispiel ist die Werkzeugmaschine als Werkstoff-Sägemaschine derart ausgebildet, dass folgende Materialien oder Baustoffe, umfassend mineralische Werkstoffe, Dämmstoffe und kombinierte Werkstoffe, mit der Werkzeugmaschine bearbeitet werden können: Lochziegel, Ziegelsteine, Mauersteine, Porenbeton, Naturstein, Beton, Polystyrol-Hartschaum bzw. EPS, z. B. Styropor, extrudierter Polystyrol-Hartschaum bzw. XPS wie Styrodur, Polyurethan bzw. PU, Polyisocyanurat-Hartschaum bzw. PIR, Materialien mit Deckschicht aus Aluminium oder Mineralvlies, Phenolharzschaum, Bakelit, Resol-Hartschaumplatten, Verbundschaum, Polyesterfaserstoffe, Mineralwolle wie Steinwolle oder Glaswolle, verfüllter Lochziegel, Dämmstoff-integrierter Hochlochziegel, Thermo-Verbundziegel. Denkbar ist auch, dass die Werkzeugmaschine als Holzsägemaschine ausgebildet ist.

Zum Beispiel ist die Werkzeugmaschine zur trennenden Bearbeitung eines Werkstücks ausgebildet. Zum Beispiel ist die Werkzeugmaschine als Bandsäge-Werkzeugmaschine ausgebildet, z. B. als Stein-Bandsägemaschine. Zum Beispiel ist die Werkzeugmaschine zur trennenden Bearbeitung eines Werkstücks aus einem Beton-, Stein- oder anderen harten Mineral-Werkstoff ausgebildet.

Zum Beispiel ist die Werkzeugmaschine als Beton-Sägemaschine, Stein-Sägemaschine, Ziegelstein-Sägemaschine, Porenbeton-Sägemaschine, Bodenstein-Sägemaschine, Mauerstein-Sägemaschine, Naturstein-Sägemaschine, Stein-Werkstoff-Sägemaschine. Zum Beispiel ist die Werkzeugmaschine ausgebildet zum Sägen bzw. trennenden Bearbeiten von Materialien wie z. B. Marmor, Granit, Kalkstein oder Holz.

### Figurenbeschreibung

Ein Ausführungsbeispiel der Erfindung ist in den Zeichnungen dargestellt und wird anhand der Figuren nachfolgend näher erläutert.

Im Einzelnen zeigt:
- Figur 1: einen schematischen Aufbau einer Werkzeugmaschine gemäß der Erfindung,
- Figur 2: einen schematischen Aufbau der Werkzeugmaschine als Teilausschnitt aus einer anderen Blickrichtung gemäß Figur 1,
- Figur 3: einen schematischen Aufbau der Werkzeugmaschine in einer perspektivischen seitlichen Teilansicht als Teilausschnitt mit von Schutzmodul und Abdeckmodul vollständig im Bearbeitungsbereich abgedecktem Sägewerkzeug,
- Figur 4: einen schematischen Aufbau der Werkzeugmaschine in Seitansicht als Teilausschnitt mit von Schutzmodul und Abdeckmodul vollständig über einen Teil der Längserstreckung des Sägewerkzeugs im Bearbeitungsbereich abgedecktem Sägewerkzeug und
- Figur 5: einen schematischen Aufbau der Werkzeugmaschine in Seitansicht als Teilausschnitt mit von Schutzmodul und Abdeckmodul im Bearbeitungsbereich vollständig freiem Sägewerkzeug.

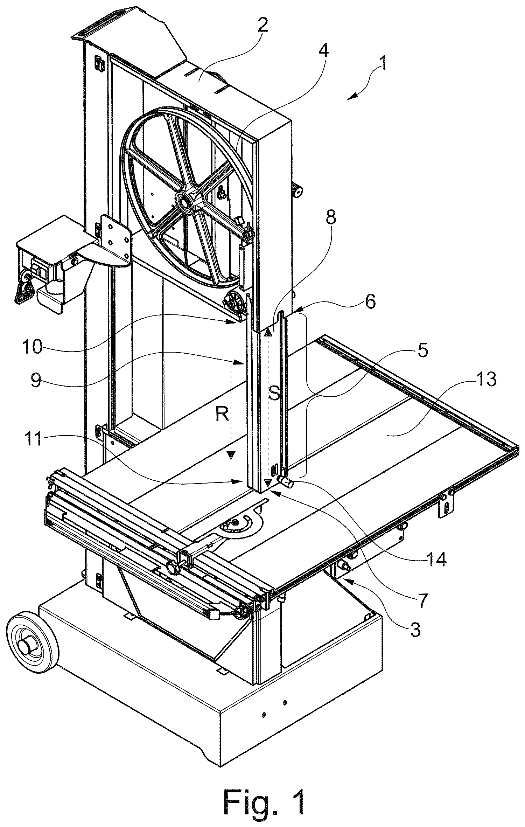

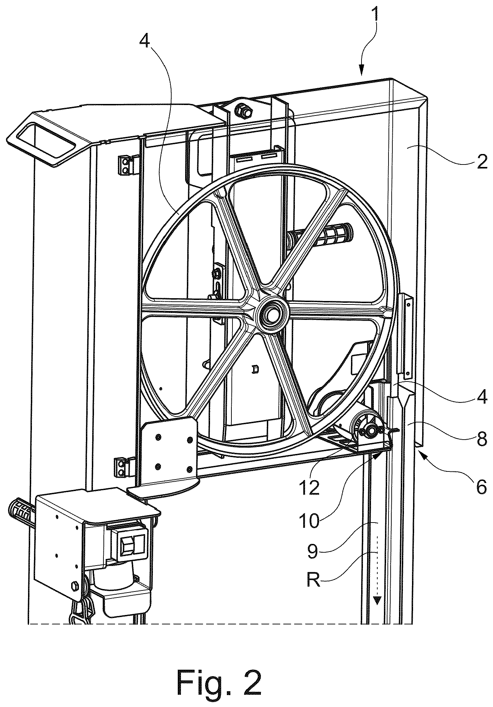

In Figur 1 ist eine mögliche Ausführung einer Werkzeugmaschine 1 mit einem von einer Antriebseinheit 3 antreibbaren Sägewerkzeug 4 im Sinne der Erfindung beispielhaft in Form eines Sägebandes dargestellt. Die Werkzeugmaschine 1 weist ein Werkzeuggehäuse 2 und ein Auflageelement 13 auf. Zum besseren Verständnis ist das Werkzeuggehäuse 2 in den Figuren 1 und 2 nicht geschlossen bzw. ohne eine verschwenkbare Türe oder Abdeckung des Werkzeuggehäuses 2 dargestellt. In einem Bearbeitungsbereich 5 ist ein zu bearbeitendes Werkstück zur Bearbeitung einbringbar. Der Bearbeitungsbereich 5 erstreckt sich zwischen einem oberen Bereichsende 6 und einem unteren Bereichsende 7. Das Auflageelement 13 bildet in der dargestellten Ausführung das untere Bereichsende 7. Der im Bearbeitungsbereich 5 vorhandene Teil des Sägewerkzeugs 4 verläuft entlang einer Bewegungsrichtung R. Die Arbeitsrichtung ist im Ausführungsbeispiel gemäß Fig. 1 von links nach rechts auf dem Auflageelement 13.

Die Werkzeugmaschine weist darüber hinaus ein Schutzmodul 8 und ein Abdeckmodul 9 auf, welche jeweils innerhalb des Bearbeitungsbereichs 5 zwischen dem oberen Bereichsende 6 und dem unteren Bereichsende 7 entlang der Bewegungsrichtung R bewegbar sind, z. B. im Aufstellzustand vertikal nach oben und unten bewegbar sind. Das Schutzmodul 8 umgibt das Sägewerkzeug 4 entlang einer Strecke S teilweise umfänglich. Die Strecke S wird in dieser Ausführung als Abstand zwischen dem oberen Bereichsende 6 und dem unteren Endabschnitt 11 des Schutzmoduls 8 verstanden.

Das Schutzmodul 8 und das Abdeckmodul 9 sind dabei derart angeordnet, dass sie das Sägewerkzeug im Bearbeitungsbereich 5 in einer Ebene senkrecht zur Bewegungsrichtung R vollständig umschließen können. Dabei deckt das Schutzmodul 8 das Sägewerkzeug 4 zwischen dem oberen Bereichsende 6 und dem unteren Endabschnitt 11 des Schutzmoduls 8 ab, während das Abdeckmodul 9 in der dargestellten Ausführungsform das Sägewerkzeug 4 zwischen einer obere Abdeckgrenze 10 und dem unteren Endabschnitt 11 des Schutzmoduls 8 abdeckt.

Das Schutzmodul 8 und das Abdeckmodul 9 sind in der dargestellten Ausführung miteinander gekoppelt, sodass das Schutzmodul 8 und das Abdeckmodul 9 gemeinsam bewegt werden können.

In der dargestellten Ausführungsform weist das Schutzmodul 8 ein Greifelement 14 auf, welches der Nutzer zur Bewegung des Schutzmoduls 8 und des Abdeckmoduls 9 greifen kann.

Figur 2 zeigt eine Ausführungsform der Werkzeugmaschine 1 ohne die Türe des Werkzeuggehäuses 2 aus einer anderen Perspektive mit Elementen im Inneren des Werkzeuggehäuses 2, welche im Nutzbetrieb von Teilen der nicht dargestellten Türe des Werkzeuggehäuses 2 verdeckt sind.

Der Teil des umlaufenden Sägewerkzeugs 4, welcher im Bearbeitungsbereich 5 angeordnet ist, bewegt sich in diesem entlang einer Bewegungsrichtung R.

Das Sägewerkzeug 4 wird zwischen dem oberen Bereichsende 6 und dem hier nicht dargestellten unteren Endabschnitt 11 des Schutzmoduls 8 vom Schutzmodul 8 in dieser Ausführungsform auf mehreren Seiten abgedeckt. Das Abdeckmodul 9 deckt das Sägewerkzeug 4 zwischen einer obere Abdeckgrenze 10 und dem unteren Endabschnitt 11 des Schutzmoduls 8 in dem vom Schutzmodul 8 nicht abgedeckten Bereich ab. Das Sägewerkzeug 4 ist umlaufend ausgebildet. Dazu dient das Laufrad im Werkzeuggehäuse 2.

Das biegsame Abdeckmodul 9, wie zum Beispiel ein streifenförmiges Edelstahlblech, ist in der dargestellten Ausführung auf- und abrollbar ausgebildet, sodass es z. B. von einem Umlenkelement wie z. B. einem Umlenkrollelement 12 auf- und abwickelbar ist, je nach Bewegungsrichtung des Abdeckmoduls 9. Werden Schutzmodul 8 und Abdeckmodul 9 in Bewegungsrichtung R bewegt, wird das Abdeckmodul 9 von dem Umlenkrollelement abgewickelt, werden Schutzmodul 8 und Abdeckmodul 9 entgegen der Bewegungsrichtung R bewegt, wird das Abdeckmodul 9 auf das Umlenkrollelement aufgewickelt.

Das starre Schutzmodul 8 bewegt sich z. B. ausschließlich linear geführt in und entgegen der Bewegungsrichtung R bzw. vertikal aus dem Inneren des Werkzeuggehäuses 2 heraus und in das Innere zurück.

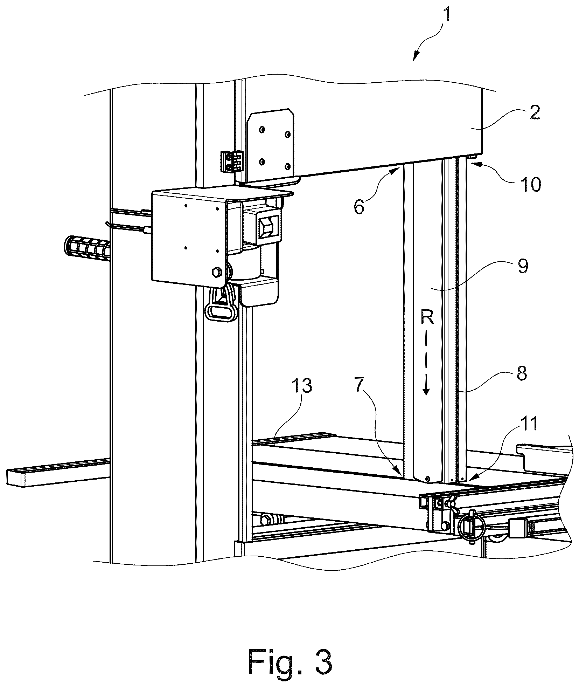

Figur 3 zeigt einen Teilausschnitt der Werkzeugmaschine 1 mit von Schutzmodul 8 und Abdeckmodul 9 vollständig im Bearbeitungsbereich 5 zwischen dem oberen Bereichsende 6 und dem unteren Bereichsende 7 abgedecktem Sägewerkzeug 4.

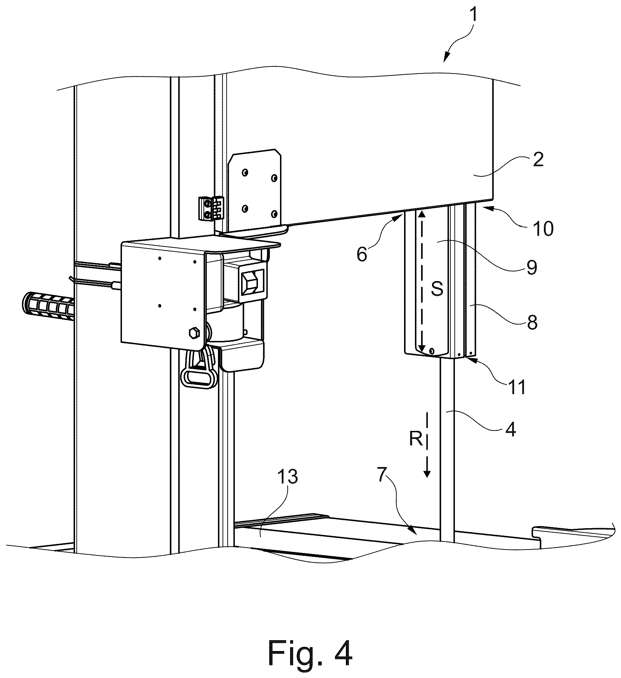

Figur 4 zeigt als Seitansicht einen Teilausschnitt der Werkzeugmaschine 1 mit von Schutzmodul 8 und Abdeckmodul 9 teilweise im Arbeitsbereich 5 zwischen dem oberen Bereichsende 6 und dem unteren Bereichsende 7 abgedecktem Sägewerkzeug 4. Das Sägewerkzeug 4 ist dabei entlang der Strecke S von Schutzmodul 8 und Abdeckmodul 9 vollständig bedeckt.

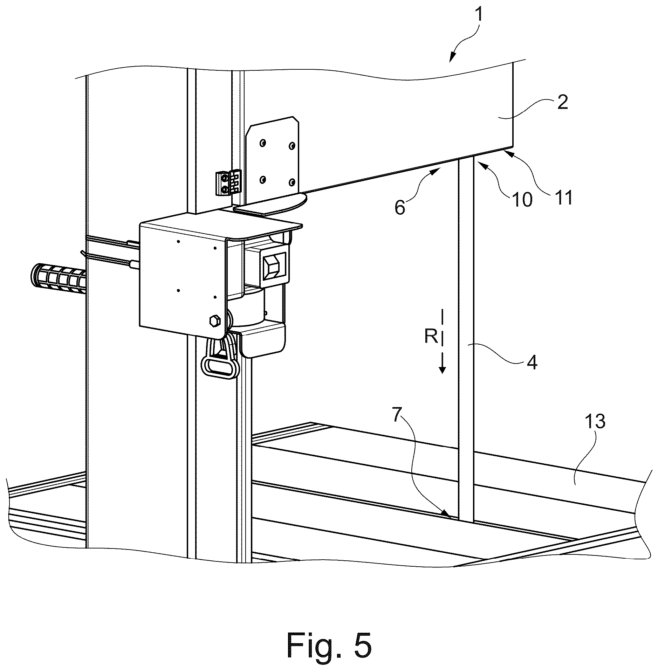

Figur 5 zeigt perspektivisch einen Teilausschnitt der Werkzeugmaschine 1, bei der Schutzmodul 8 und Abdeckmodul 9 vollständig aus dem Bearbeitungsbereich 5 heraus verschoben sind, sodass das Sägewerkzeug 4 innerhalb des Bearbeitungsbereichs 5 vollständig frei zugänglich und von Schutzmodul 8 und Abdeckmodul 9 nicht bedeckt vorhanden ist. Dabei steht dieser Bereich 5 vollständig als Arbeitsbereich zur Verfügung. Über die gesamte Länge des Sägewerkzeug 4 über die betreffende vertikale Höhe, da ohne Umhüllung mit Abdeckmodul 9 und Schutzmodul 8, kann das Sägewerkzeug 4 in Anlage an einem auf dem Auflageelement 13 positionierten Werkstück zu dessen trennender Bearbeitung gelangen.

### Bezugszeichenliste

- 1: Werkzeugmaschine
- 2: Werkzeuggehäuse
- 3: Antriebseinheit
- 4: Sägewerkzeug
- 5: Bearbeitungsbereich
- 6: oberes Bereichsende
- 7: unteres Bereichsende
- 8: Schutzmodul
- 9: Abdeckmodul
- 10: obere Abdeckgrenze
- 11: unterer Endabschnitt
- 12: Umlenkrollelement
- 13: Auflageelement
- 14: Greifelement

- R: Bewegungsrichtung
- S: Strecke

## Patentansprüche

1. Werkzeugmaschine (1) mit einem Werkzeuggehäuse (2) und einer Antriebseinheit (3) für ein Sägewerkzeug (4) der Werkzeugmaschine (1),
- wobei das Sägewerkzeug (4) in einem Arbeitsbetrieb der Werkzeugmaschine (1) mit der Antriebseinheit (3) umlaufend antreibbar ist,
- wobei die Werkzeugmaschine (1) im Arbeitsbetrieb zum trennenden Bearbeiten eines Werkstücks ausgebildet ist,
- wobei die Werkzeugmaschine (1) einen Bearbeitungsbereich (5) umfasst, in welchem ein Werkstück zur Bearbeitung positionierbar ist,
- wobei sich der Bearbeitungsbereich (5) zwischen einem oberen Bereichsende (6) und einem unteren Bereichsende (7) erstreckt,
- wobei die Werkzeugmaschine (1) ein Schutzmodul (8) umfasst,
- wobei das Schutzmodul (8) einen unteren Endabschnitt (11) aufweist,
- wobei das Schutzmodul (8) derart ausgebildet ist, dass das Schutzmodul (8) wenigstens abschnittsweise entlang einer Bewegungsrichtung (R) des Sägewerkzeugs (4) im Bearbeitungsbereich (5) bewegbar ist,
- wobei sich das Schutzmodul (8) entlang einer Strecke (S) zwischen dem oberen Bereichsende (6) des Bearbeitungsbereichs (5) und dem unteren Endabschnitt (11) des Schutzmoduls (8) erstreckt und in diesem Bereich das Sägewerkzeug (4) im Querschnitt umfänglich teilweise umgibt,
**dadurch gekennzeichnet, dass** ein Abdeckmodul (9) vorgesehen ist,
- wobei das Abdeckmodul (9) so ausgebildet ist, dass das Abdeckmodul (9) im Bearbeitungsbereich (5) entlang einer Bewegungsrichtung (R) des Sägewerkzeugs (4) bewegbar ist,
- wobei das Abdeckmodul (9) so ausgebildet ist, dass das Abdeckmodul (9) das Sägewerkzeug (4) zwischen dem unteren Endabschnitt (11) des Schutzmoduls (8) und einer oberen Abdeckgrenze (10) um mehr als 50 % der Längserstreckung des Sägewerkzeugs (4) abdeckt,
- mit der Wirkung, dass das Sägewerkzeug (4) zwischen der oberen Abdeckgrenze (10) und dem unteren Endabschnitt (11) des Schutzmoduls (8) von dem Schutzmodul (8) und dem Abdeckmodul (9) um mehr als 50 % der Längserstreckung des Sägewerkzeugs (4) vollumfänglich abgedeckt ist.

2. Werkzeugmaschine (1) nach Anspruch 1, **dadurch gekennzeichnet, dass** das Abdeckmodul (9) rollbar ausgebildet ist.

3. Werkzeugmaschine (1) nach einem der vorangegangenen Ansprüche, **dadurch gekennzeichnet, dass** ein Umlenkrollelement (12) vorhanden ist, wobei das Abdeckmodul (9) an dem Umlenkrollelement (12) fixiert ist, wobei das Umlenkrollelement (12) dazu ausgebildet ist, das Abdeckmoduls (9) aufzuwickeln.

4. Werkzeugmaschine (1) nach einem der vorangegangenen Ansprüche, **dadurch gekennzeichnet, dass** das Abdeckmodul (9) mit dem Schutzmodul (8) verbunden ist.

5. Werkzeugmaschine (1) nach einem der vorangegangenen Ansprüche, **dadurch gekennzeichnet, dass** das Abdeckmodul (9) durch das Umlenkrollelement (12) auf- und abwickelbar ausgebildet ist.

6. Werkzeugmaschine (1) nach einem der vorangegangenen Ansprüche, **dadurch gekennzeichnet, dass** das Umlenkrollelement (12) innerhalb des Werkzeuggehäuses (2) vorhanden ist.

7. Werkzeugmaschine (1) nach einem der vorangegangenen Ansprüche, **dadurch gekennzeichnet, dass** das Umlenkrollelement (12) federgespannt ausgebildet ist.

8. Werkzeugmaschine (1) nach einem der vorangegangenen Ansprüche, **dadurch gekennzeichnet, dass** das Umlenkrollelement (12) als eine Rolle ausgebildet ist.

9. Werkzeugmaschine (1) nach einem der vorangegangenen Ansprüche, **dadurch gekennzeichnet, dass** die Werkzeugmaschine (1) am unteren Bereichsende (7) des Bearbeitungsbereichs (5) ein Auflageelement (13) zur Auflage eines Werkstücks bei der Bearbeitung des Werkstücks aufweist, wobei das Schutzmodul (8) und/oder das Abdeckmodul (9) bis in Kontakt mit dem Auflageelement (13) bewegbar ausgebildet sind.

10. Werkzeugmaschine (1) nach einem der vorangegangenen Ansprüche, **dadurch gekennzeichnet, dass** die Werkzeugmaschine (1) als Mineralwerkstoff-Sägemaschine ausgebildet ist.
